# EUROPEAN PATENT SPECIFICATION

(11) **EP 2 275 702 B1**
(45) Date of publication and mention of the grant of the patent: **28.11.2012**
(21) Application number: 10185290.3
(22) Date of filing: 26.10.2004
(51) Int. Cl.: F16D 65/12

(54) **Disc for a disc brake**
Scheibe für eine Scheibenbremse
Disque pour frein à disque

(43) Date of publication of application: 19.01.2011
(62) Divisional of application: 04791924.6
(73) Proprietor: Freni Brembo S.p.A., 24035 Curno (Bergamo) (IT)
(72) Inventor: Schorn, Michael, 24040 Stezzano, BERGAMO (IT); Tironi, Giovanni Mario, I-24044, Dalmine, BERGAMO (IT); Biondo, Simone, I-20051, Limbiate, MILANO (IT)
(74) Representative: Crippa, Paolo Ernesto

(56) References cited:
- EP-A1- 0 077 137
- EP-A1- 1 229 265
- DE-A1- 4 003 732
- US-A- 5 161 652
- US-A- 6 152 270

## Description

The present invention relates to a disc for a disc brake, particularly though not exclusively, for applications in the car field. A disc of this type is known from US 5 109 960 and US5161652 made in one single piece.
US 6,152,270 shows a disc of a disc brake having a brake member that includes a projecting portion, which projects from its smaller diameter surface and is embedded in an hub during the casting thereof so as to occupy a seat 5 in the hub itself.
EP 0 077 137 shows disc for a disc brake having an outer cast iron portion with projecting lugs and an inner aluminium portion that contracts axially to grip the lugs and firmly secure the inner and outer parts, respectively, together.
DE 4003732 shows disc for a disc brake according to the preamble of claim 1.

It is known that the discs of the above-mentioned type consist of two parts sharing a rotation axis. A first part, the support bell, is destined to be connected to the wheel hub of a vehicle, whereas the remaining peripheral part, the braking band, is destined to cooperate with the disk brake calipers to carry out the braking action on the vehicle. The braking band can be either solid or, such as in the examples represented in the annexed figures, ventilated. The ventilated band comprises two binders being connected by a plurality of bridges, such as to define cooling air ducts.

With reference to the disc and the rotation axis thereof, any direction parallel to said axis is defined as being axial, any perpendicular direction to the axis and incident thereto is defined as being radial, and any direction tangential to a circumpherence centered on said axis and laying on a normal plane to said axis is defined as being tangential.

It is also known that, when the brake is being operated, the friction between the brake caliper pads and the braking band surface generates a considerable amount of heat that requires to be released. The generated heat causes a number of unwanted phenomena, first of all the overheating of the components and the consequent thermal expansion and distortion of the same.

In the disc brake field, the need is particularly felt to provide the braking band in a material that, besides ensuring the desired friction characteristics, is capable of maintaining its mechanical characteristics as much unchanged as possible upon increase in the operating temperature. In view of the above, it is particularly convenient to manufacture the braking band of cast iron.

Likewise, the need is particularly felt of manufacturing the support bell of a material that is as much light as possible, first of all to reduce the mass of the disc and consequently the non-suspended masses of the vehicle. In view of the above, it is particularly convenient to manufacture the support bell of a light alloy, such as aluminium alloy.

With reference to the prior art discs, it should be noted that the distortions caused by heat strain entail inconveniences in the operation of the disc brake, first of all the uneven wear of the brake caliper pads. This is mainly due to the fact that, contrary to the braking band, which tends to be radially deformed while remaining coplanar with itself, the support bell is deformed by taking the shape of a cone that also defines the twist of the braking band. The deformation of the support bell substantially defines the twist and accordingly the loss of coplanarity of the braking band.

From what has been stated above, there emerges a double need of maintaining unchanged the transmission of the braking torque from the braking band to the support bell and, at the same time, allowing the braking band to radially dilate, due to the heat stress to which it is subjected as much independently from the support bell as possible.

The patent EP1092889, in the name of the same applicant, describes a disc in which the bell of aluminium alloy and the braking band of cast iron are joint by a plurality of stainless steel pins. The pins, which are interference coupled in the braking band and slackly in the bell, make it possible for the band to radially dilate. This solution is particularly expensive and complicated from the point of view of construction. Furthermore, the small section of the steel pins induce high stress peaks in the material in the step of transmission of the braking torque from the band to the bell.

It is also known from patent US 6,152,270, in the name of the same applicant, a disc having a braking band of cast iron and a support bell made of a light alloy. Both pieces are produced by subsequent castings in such a way as to be intimately adhered, so that they are integral to each other. This solution, though being cost-effective and easy to implement, does not allow the band to radially dilate independently from the bell.

The problem at the heart of the present invention is to conceive a disc for a disc brake that has such structural and functional characteristics to meet the above-mentioned requirement and overcoming, at the same time, the drawbacks cited with reference to the prior art.

This problem is resolved by a disc for disc brake in accordance with claim 1.

Further characteristics and the advantages of the disc for a disc brake according to the invention will become apparent from the description of a preferred embodiment thereof, which is merely illustrative and nonlimiting, with reference to the annexed figures, in :

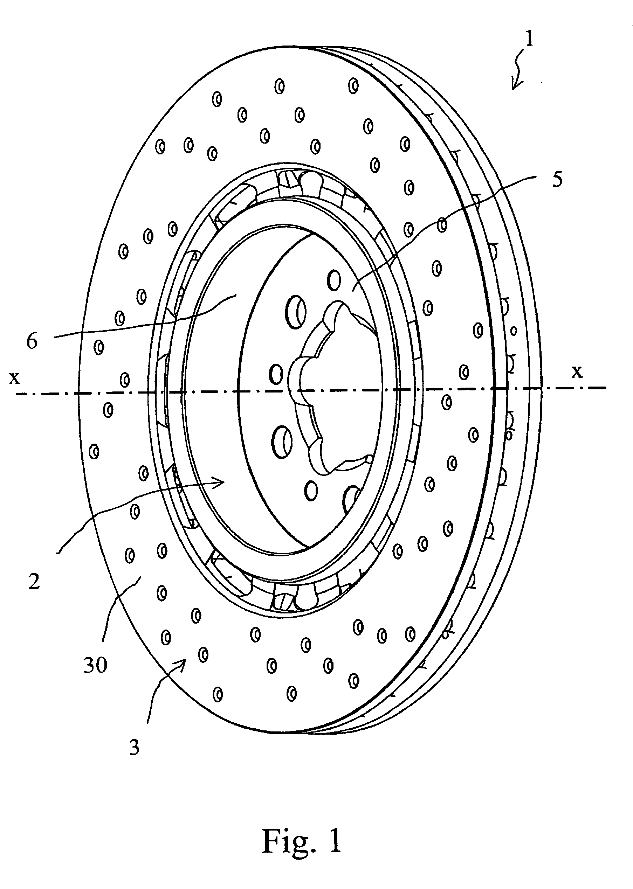

- figure 1 shows a disc for a disc brake according to the invention in a perspective view;

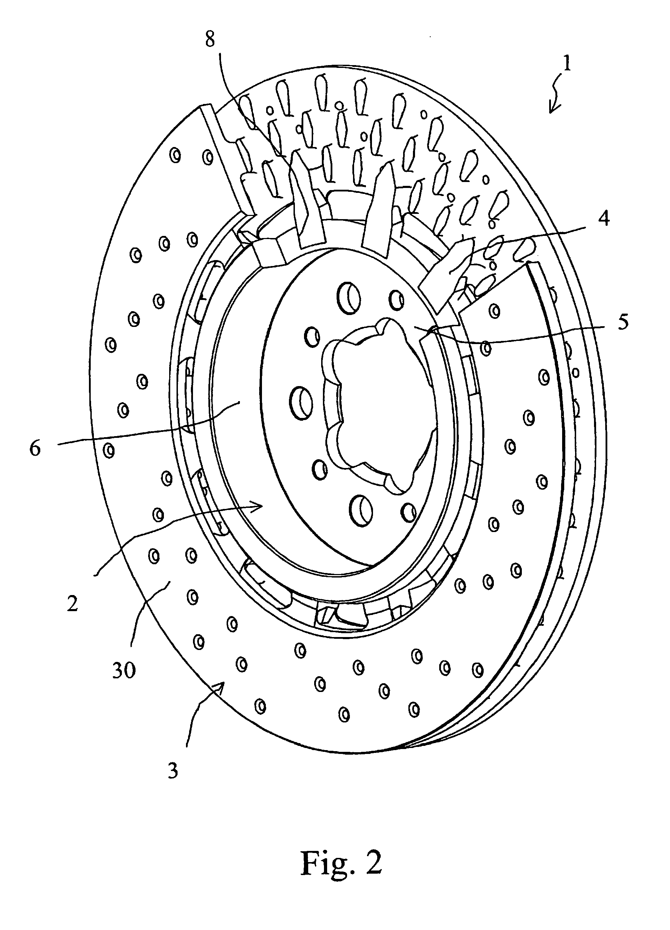

- figure 2 shows the disc from figure 1 in a partially sectional perspective view;

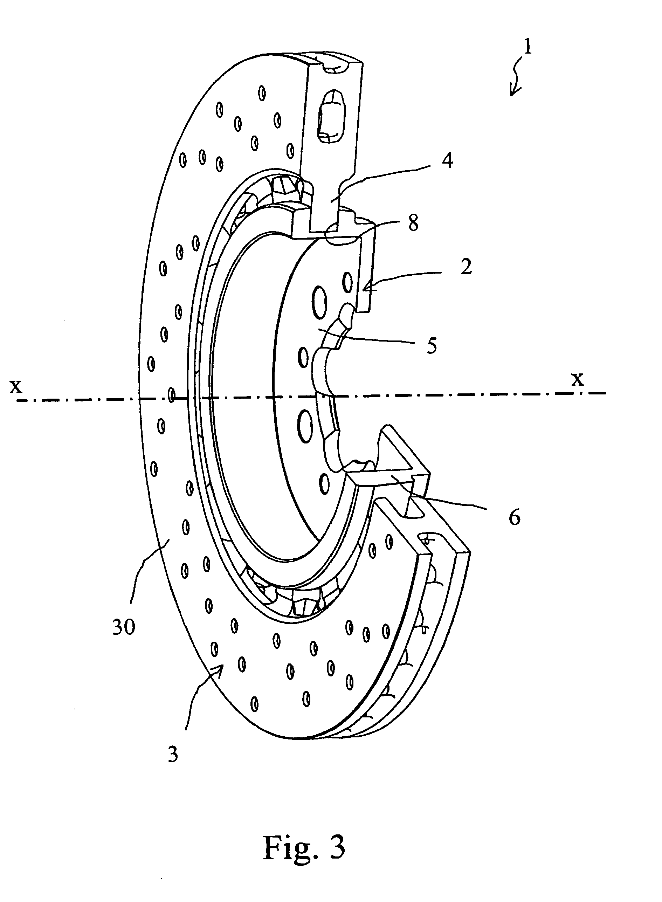

- figure 3 shows the disc from figure 1 in a partially sectional perspective view;

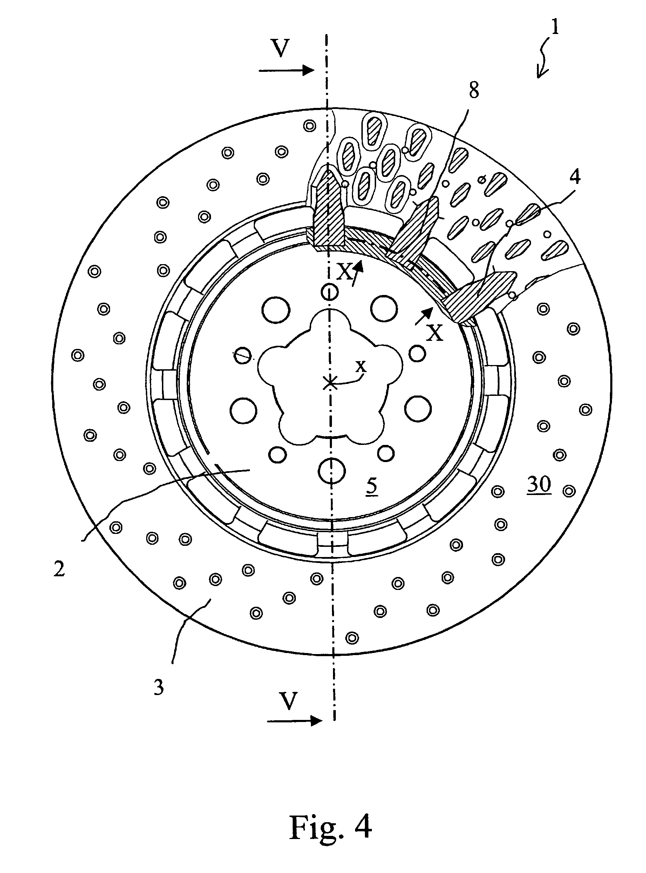

- figure 4 shows the disc from figure 1 in a partially sectional front view;

- figure 5 shows a section taken along the line V-V of figure 4;

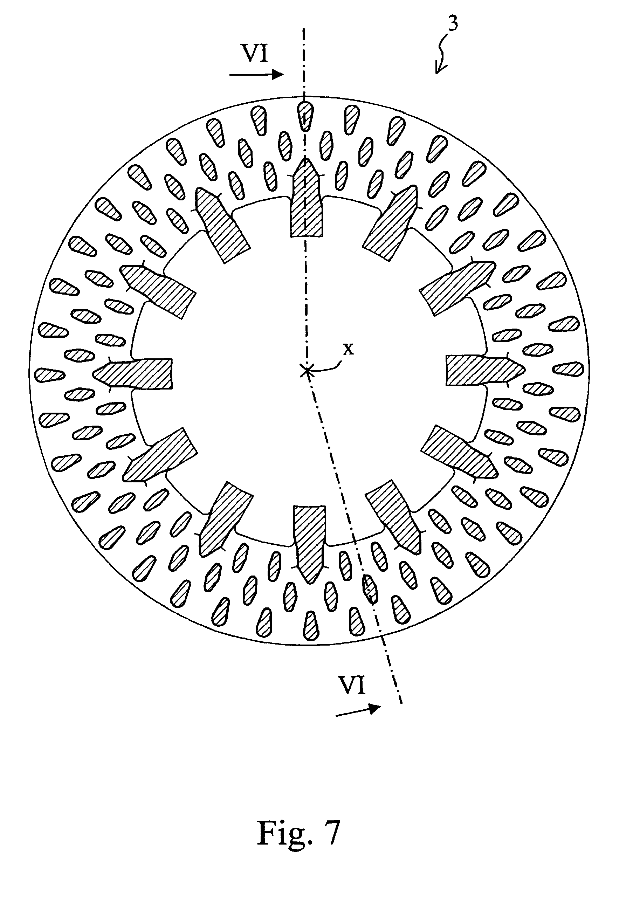

- figure 6 shows a braking band according to the invention taken along the line VI-VI of figure 7;

- figure 6a shows a detail from figure 6;

- figure 7 shows a braking band according to the invention taken along the line VII-VII of figure 6;

- figures 8.a and 8.b show a detail of a braking band according to the invention in two steps of the manufacturing process;

- figures 9.a, 9.b and 9.c show three different embodiments of a detail of a braking band according to the invention;

- figure 10 shows a section taken along the line X-X of figures 4 and 5;

- figures 11.a to 11.e are subsequent steps of the method for manufacturing the disc according to the invention.

With reference to the above mentioned figures, with 1 there is generally indicated a disc according to the invention that is destined to be used in a disc brake (not shown) of a vehicle, for example a car.

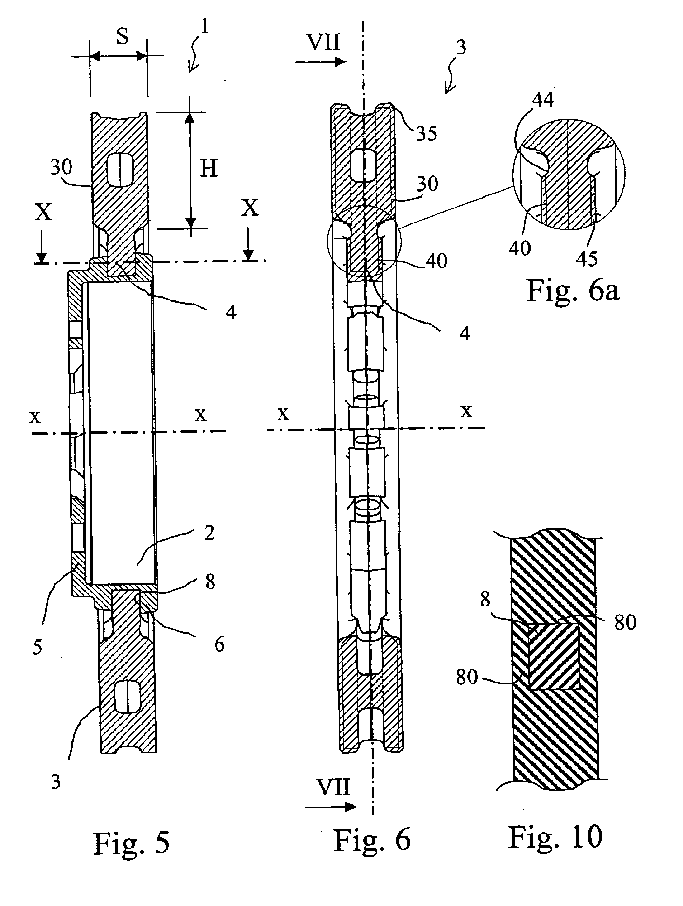

The disc 1 has a substantially circular shape that develops around a symmetry axis being indicated with x-x and can be defined a middle plane, the outline thereof being indicated with a dotted line in figure 6.

The disc 1 comprises a support bell 2 and a braking band 3, that is coaxial with the support bell 2, being provided with a plurality of connecting elements 4 suitable to connect the braking band 3 to the support bell 2.

The support bell 2 comprises a central portion 5 destined to be connected, in a conventional manner, to the wheel hub of a vehicle and a peripheral annular portion 6 which is cantilevered from the central portion 5, for example in a direction substantially parallel to x-x axis.

The braking band 3 is embodied by an annular disc of a preset thickness S and height H, which is coaxially supported by the peripheral annular portion 6 of the support bell 2. The braking band 3 is destined to cooperate with the disc brake caliper to exert the braking action on the vehicle.

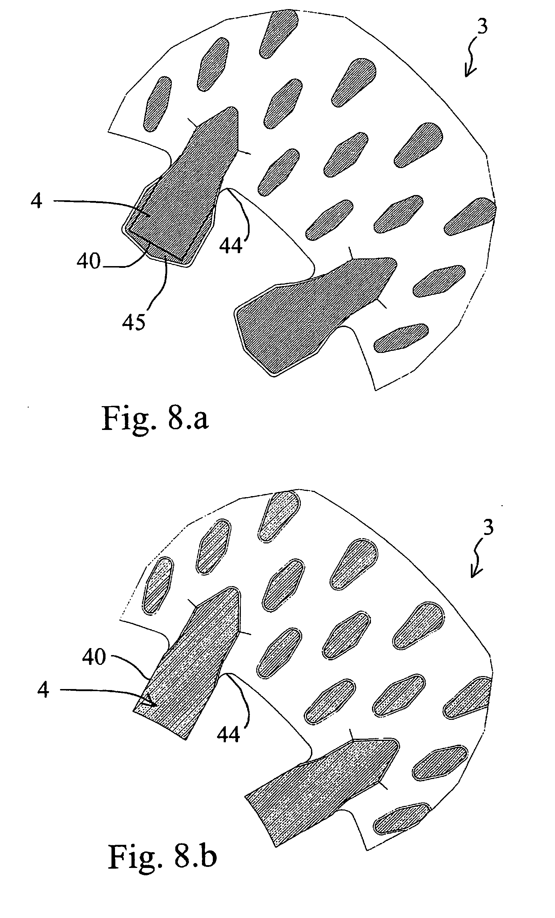

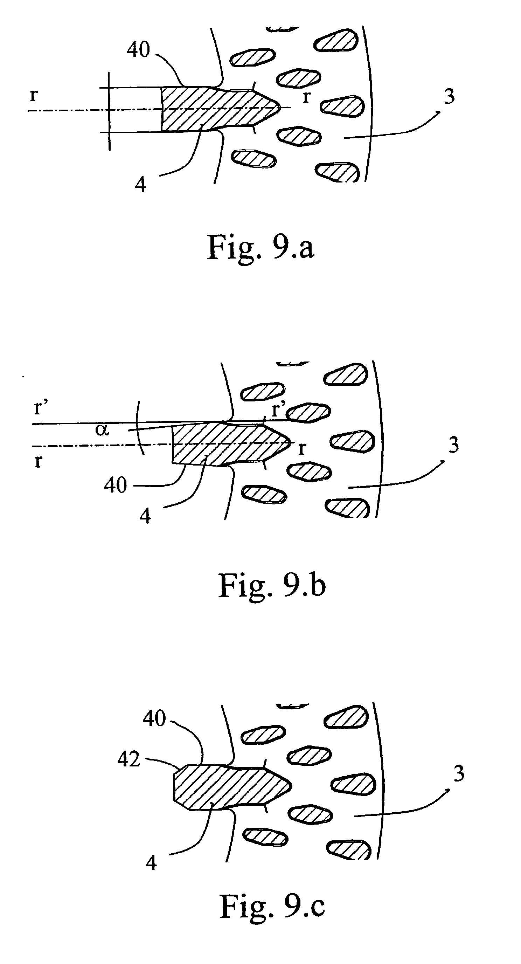

With particular reference to figures 8.b and 9.a, each of the connecting means 4 is embodied for example by a prismatic projection having a quadrangular section, which is suitable to radially connect the braking band 3 to the support bell 2. In figure 9.a there is shown how both side faces 40 of the prismatic projection are parallel to the r-r radial axis passing through the center of the projection 4.

Alternatively, projections having different shapes can be also used.

With particular reference to figure 9.b, for example, the side faces 40 of the projection 4 are not parallel to each other. Each of them defines an angle α with the direction r'-r' parallel to the radial axis r-r passing through the center of the projection. The angle α can vary, according to the particular design requirements, from 0° to 3°. Consequently, the angle 2α defined between two opposite faces 40 can vary from 0° and 6.

With particular reference to figure 9.c, again, the projection 4 has side faces 40 being parallel for the first length thereof being contiguous to the root and convergent in the second end length where a chamfer 42 is formed. In other words, the projection of figure 9.c is similar to that of figure 9.a, to which the sharp edges at the ends radially near to axis x-x have been chamfered.

The configuration of figure 9.c with the chamfered sharp edges, besides from a geometry like that of figure 9.a with parallel side faces 40, can also be adopted from a geometry like that in figure 9.b with slightly inclined faces.

Independently of the geometry selected, the side faces 40 of the single projection 4 are arranged such as to limit their surface roughness within preset values. Preferably, the side faces 40 of the projections have an average surface roughness Rₐ less than 6.4 × 10⁻⁶ meters.

The connecting elements 4, i.e. the projections, are made as one piece with the braking band 3 such as to be integral therewith.

As can be seen in the annexed drawings, the projections 4 are joined to the body of the braking band 3 by means of fillets 44. More particularly, the detail of the band section from figure 6.a and the detail of the section in the middle plane of figures 8.a and 8.b should be seen. Upon defining the particular union radius during the design step, one should take into account the type of material employed for manufacturing the braking band 3 in a known manner.

The projections 4 are housed in corresponding radial housings 8 being obtained in the peripheral annular portion 6 of the support bell 2. These radial housings are 8 defined by walls 80 being made as one piece with the bell body 2, such as being integral therewith.

The radial housings 8, being provided by means of a method that will be described herein below, are perfectly complementary to the side faces 40 of the respective projections 4 or at least some lengths thereof.

n other words, the radial housings 8 at least partially surround the projections 4 such as to restrain the movements thereof in the axial and tangential directions.

The coupling between the projection 4 and the housing 8 is not an interference coupling, on the contrary it provides a backlash, even though very small.

The surfaces of the side faces 40 and the walls 80 are intimately coupled to each other without any adhesion to each other. In other words, the surfaces of the side faces 40 and the walls 80 are intimately coupled and disjointed.

In view of the above, it will appreciated by those skilled in the art that both the walls 80 and the side faces 40 are made such as to allow that, while movements in the axial and tangential directions are prevented because the side faces 40 rest on walls 80, the radial movement of the single projection 4 within the single housing 8 is not prevented by anything.

Particularly, the radial movement is not prevented either by macroscopic fittings or micro-telescoping of both materials composing the projection 4 and the walls 80 of housing 8. These micro-telescoping may occur with greater surface roughness of the surfaces.

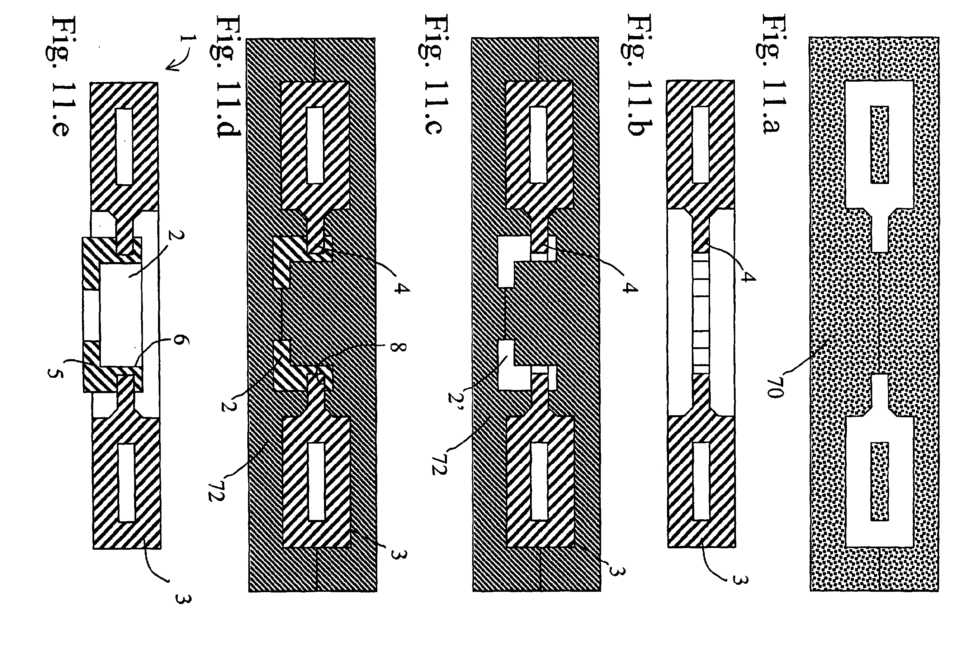

With particular reference to figures 11, the above method for manufacturing the disc according to the invention, provides first of all that the braking band 3 be manufactured of a suitable material, for example cast iron.

Advantageously, in a manner known per se, the braking band 3 is provided by casting, for example in a sand mould 70. In this manufacturing step of the band, the connecting elements 4 are also manufactured, for example the protrusions 4 described above.

It is particularly advantageous, in this casting step, to provide a stock 35, 45 both on the braking band 3 itself and the side faces 40 of the projections 4. In figure 6 there is outlined how the surface 30 of the braking band 3 will be after the stock 35 has been removed; in figure 6, in the detail of figure 6.a and in figure 8.a there is outlined how the side face 40 of the projection 4 will be after the stock 45 has been removed.

The stock being provided upon the casting step has to be removed in order to bring the braking band to the desired thickness S, and at the same time, to bring the projections 4 to the desired size.

This step of removing the stock can be brought to completion in a manner known per se by means of tool machining. Figures 8.a and 8.b show two projections 4 at the end of the casting step and at the end of the step of removing the stock 45, respectively.

In accordance with an embodiment, in this step there is also defined the geometry of protrusions 4. In particular, as described above, one may provide that the faces 40 are parallel, or one may provide that they are biased relative to each other according to a small angle, preferably comprised 0° and 6°.

Simultaneously and independently from the selection on the parallelism of the faces 40, one may also decide whether to provide a chamfer 42 or let the faces 40 end with a sharp edge.

In accordance with an embodiment of the method, during this working step, the desired surface roughness is conferred to the faces of the projections. Particularly, the surface roughness Rₐ will be preferably less than 6.4 × 10⁻⁶ meters.

In accordance with another embodiment of the method, during the manufacturing step of the braking band, any stock 45 cannot be provided on the projections 4 of the braking band 3, such that the desired geometry is already conferred thereto. For example, the braking band can be obtained by means of chill casting instead of sand. It is thus possible to obtain an improved control on the shape of the piece being manufactured by casting. In accordance with this method, due to a manufacturing step of the braking band 3 allowing to control the geometry, the surface finishing step may even be superfluous. In fact, the projections 4 being manufactured for example by chill casting may already have a suitable surface roughness, without requiring further working to avoid micro-telescoping.

Once that the braking band 3 and the projections 4 have reached the desired size and surface roughness, the method for manufacturing the disc according to the invention provides that the braking band is placed in a mould 72 for casting the support bell 2. The mould 72, which is schematically represented in figure 11.c, houses the braking band 3 such as to cause the projections 4 to overhang towards the inside of cavity 2', which is complementary to the shape of the bell 2.

Thereafter, the molten metal destined to form the bell 2, preferably a light alloy, for example an aluminium alloy is cast in the cavity 2'.

In this way, in the support bell 2, a housing 8 is manufactured for each projection 4. The surfaces of the side faces 40 and the walls 80 thus made are intimately coupled to each other without any adhesion occurring to each other.

Particularly, both the walls 80 and the side faces 40 are manufactured such as to allow the radial movement of the single projection 4 within the single housing 8, whereas the movement in the axial and tangential directions are prevented because the side faces 40 rest on the walls 80.

Particularly, the radial movement is not prevented either by macroscopic fittings or micro-telescoping of both materials composing the projection 4 and walls 80 of the housing 8. These micro-telescoping may occur with greater surface roughness of the surfaces.

In accordance with an embodiment of the method, before carrying out the cast of the support bell 2, when the projections 4 are coated with a protective layer. It is thus possible to ensure a minimum value of the coupling backlash and avoid, with even greater reliability, any possible micro-telescoping of the material of the support bell 2 and the material of the braking band 3.

This protective layer can be made for example of powdered graphite or a resin loaded with powdered graphite. In this case, upon manufacture of the bell 2, due to the temperature of the alloy to which the protective layer is put in contact, the protective layer is carbonized and transformed, in turn, to powdered graphite that is easily removed by shaking or by localized jets of compressed gas. It is thus possible to ensure a backlash slightly greater in the coupling of each projection 4 to the corresponding housing 8.

After the cast of the bell has solidified, the opening step of the moulds provides the disc according to the invention.

Those skilled in the art will appreciate that a disc according to the invention being manufactured in accordance with the described method according to the invention, overcomes the problems complained in the prior art.

Particularly, when the disc 1 according to the invention is being used, despite the high temperature being reached by the braking band 3, is not subjected to any deformation besides the thermal expansion in its plane. In fact, due to the fact that each projection 4 is enabled to radially slide within its housing 8, the braking band 3 is free to be dilated in its plane independently from the support bell 2.

The slight backlash allowing the projections 4 to radially slide within the housings 8 can be defined for example during the first operating cycles. The poor surface roughness of the side faces 40 and walls 80 allows the projections 4 to slide along the housings 8 since the very beginning. The first sliding cycles determine the removal of any micro-relief and hence define the coupling backlash.

The embodiment of the disc 1 providing a substantial parallelism of the opposite side faces 40 of the projections 4 allows to obtain considerable advantages when the thermal expansion of the braking band 3 is the greatest. In fact, due to the parallelism of the faces 40, to any radial displacement of any projection 4, which is due to the thermal expansion of the braking band 3, there will not follow any increase in the coupling backlash of the projection 4 to the housing 8.

The embodiment of disc 1 providing a small angle 2α between the opposite side faces 40 allows to obtain further advantages whenever the thermal expansion of the projections 4 is non-negligible. In fact, because of the small angle 2α, the radial displacement of each projection 4 due to the thermal expansion of the braking band 3 enables each projection 4 to dilate, in turn, without any risk of seizing within the housing 8.

The embodiment of the disc 1 providing the chamfer 42 of the sharp edges of faces 40 to those ends radially proximate to the axis x-x allows to improve the comfort during the cooling step of the disc 1 at the end of each use session. In fact, due to the chamfer 42, during the slight radial displacement of each projection 4 towards the axis x-x, one obtains a clear noise reduction due to the fact that each projection 4 slides within its housing 8.

A similar effect is also obtained by biasing the faces 40 by a small angle α relative to the radial axis r-r passing through the center of the projection 4.

Particularly, it should be noted that the projections 4, being manufactured as one piece with the braking band 3, are capable of withstanding high tangential loads and thus transmitting a considerable braking torque. Particularly, the presence of the fillets 44 allows an optimum distribution of the stress from the projection to the braking band, and vice versa.

Analogously, the walls 80 of the housings 8, being manufactured as one piece with the support bell 2, are also capable of withstanding high tangential loads and thus transmitting a considerable braking torque.

In accordance with the preferred embodiments of the disc 1, the total braking torque is distributed over a congruous number of projections 4. The particular embodiment illustrated in the annexed drawings distributes for example the total torque over 12 projections. The number of projections is preferably greater than 6 and still more preferably greater than 10.

The particular geometry of the projections 4 and housings 8 being illustrated in the annexed drawings also allows to distribute the single braking torque quota proper of each projection over a wide contact surface of the side face 40 of projection 4 to the wall 80 of the housing 8. In this way, it is possible to dramatically reduce the stress peaks on the coupling of the side face 40 with the wall 80.

Obviously, those skilled in the art, aiming at satisfying contingent and specific requirements, will be able to carry out a number of modifications and variants to the disc for a disc brake according to the invention, all being however contemplated within the scope of protection of the invention such as defined in the following claims.

Accordingly, for example the step of surface finishing of the side faces 40 of the projections 4 can be brought to completion by other known methods, such as for example by dipping the workpiece in a vibrating tank containing abrasive elements.

Alternatively, the section of the protrusions 4 can vary from the rectangular one described above, being sufficient to vary also the section of the radial housings in a corresponding manner.

## Claims

1. A disc for a disc brake comprising a support bell (2) defining a rotation axis x-x and having a plurality of radial housings (8), defined by walls (80) in the support bell (2), a braking band (3) substantially coaxial with said rotation axis x-x, and a plurality of connecting elements (4) comprising projections suitable to connect the braking band (3) to the support bell (2), wherein:
- said connecting elements (4) are integral and made as one piece with said braking band (3) and comprise side faces (40);
- said connecting elements (4) are housed in said radial housings (8) such as to be fastened in the axial direction and in the tangential direction, and such as to be free in the radial direction;
- said connecting elements (4) project inwardly from said braking band (3) in order to engage said corresponding radial housings (8);
**characterized in that**:
- said radial housings (8) surround the projections 4 such as to restain the movements thereof in the axial and tangential directions;
- said walls (80) being integral and made as one piece with the support bell (2);
- the surfaces of said side faces (40) of the connecting elements (4) and said walls (80) of said radial housings (8) are intimately coupled and disjointed, providing a backlash between the projections (4) and the housing (8).

2. The disc according to any preceding claim, wherein said connecting elements (4) have a quadrangular section.

3. The disc according to claim 2, wherein said side faces (40) are parallel to each other.

4. The disc according to claim 2 wherein said side faces (40) are biased to each other by an angle 2α.

5. The disc according to claim 4 wherein said angle 2α is comprised from 0° to 6°.

6. The disc according to any claim 3 to 5 wherein said side faces (40) comprise a chamfer (42).

7. The disc according to any claim 3 to 6 wherein said side faces (40) have an average surface roughness Rₐ less than 6.4 × 10⁻⁶ meters.

8. The disc according to any preceding claimwherein between said braking band (3) and said connecting elements (4) there are arranged fillets (44).

9. The disc according to any preceding claim wherein the disc is manufactured providing a protective layer on the projections (4) in order to ensure a defined minimum backlash between the projections (4) and the housing (8).

10. The disc according to the preceding claim wherein said protective layer is powdered graphite or a resin loaded with powdered graphite.

11. The disc according to the preceding claim wherein upon manufacture of the bell (2), the protective layer is carbonized and transformed, to powdered graphite and this powdered graphite is removed, for example by shaking or by localized jets of compressed gas.

## Patentansprüche

1. Scheibe für eine Scheibenbremse, umfassend eine Trageglocke (2), welche eine Rotationsachse x-x definiert und eine Mehrzahl von radialen Gehäusen (8) aufweist, welche durch Wände (80) in der Trageglocke (2) definiert sind, ein im Wesentlichen zu der Rotationsachse x-x koaxiales Bremsband (3), und eine Mehrzahl von Verbindungselementen (4), welche Vorsprünge umfassen, die geeignet sind, das Bremsband (3) mit der Trageglocke (2) zu verbinden, wobei:
- die Verbindungselemente (4) integral und einteilig mit dem Bremsband (3) hergestellt sind und Seitenflächen (40) umfassen;
- die Verbindungselemente (4) in den radialen Gehäusen (8) derart aufgenommen sind, dass sie in der axialen Richtung und in der tangentialen Richtung befestigt sind, und derart, dass sie in der radialen Richtung frei sind;
- die Verbindungselemente (4) von dem Bremsband (3) nach innen vorstehen um mit den entsprechenden radialen Gehäusen (8) in Eingriff zu treten;
**dadurch gekennzeichnet, dass**:
- die radialen Gehäuse (8) die Vorsprünge (4) derart umgeben, dass die Bewegungen davon in der axialen und tangentialen Richtung eingeschränkt werden;
- die Wände (80) integral und einteilig mit der Trageglocke (2) hergestellt sind;
- die Oberflächen der Seitenflächen (40) der Verbindungselemente (4) und die Wände (80) der radialen Gehäuse (8) innig gekoppelt und unzusammenhängend sind, wodurch ein Totgang zwischen den Vorsprüngen (4) und dem Gehäuse (8) bereitgestellt wird.

2. Scheibe nach einem der vorhergehenden Ansprüche, wobei die Verbindungselemente (4) ein viereckiges Profil aufweisen.

3. Scheibe nach Anspruch 2, wobei die Seitenflächen (40) zueinander parallel sind.

4. Scheibe nach Anspruch 2, wobei die Seitenflächen (40) gegeneinander um einen Winkel 2a geneigt sind.

5. Scheibe nach Anspruch 4, wobei der Winkel 2a zwischen 0° und 6° liegt.

6. Scheibe nach einem der Ansprüche 3 bis 5, wobei die Seitenflächen (40) eine Abschrägung (42) umfassen.

7. Scheibe nach einem der Ansprüche 3 bis 6, wobei die Seitenflächen (40) eine durchschnittliche Oberflächenrauhigkeit Rₐ von weniger als 6,4 * 10⁻⁶ m aufweisen.

8. Scheibe nach einem der vorhergehenden Ansprüche, wobei zwischen dem Bremsband (3) und den Verbindungselementen (4) Leisten (44) angeordnet sind.

9. Scheibe nach einem der vorhergehenden Ansprüche, wobei die Scheibe derart hergestellt ist, dass sie eine Schutzschicht auf den Vorsprüngen (4) bereitstellt, um einen definierten minimalen Totgang zwischen den Vorsprüngen (4) und dem Gehäuse (8) sicherzustellen.

10. Scheibe nach dem vorhergehenden Anspruch, wobei die Schutzschicht Graphitpulver oder ein mit Graphitpulver versehenes Harz ist.

11. Scheibe nach dem vorhergehenden Anspruch, wobei bei Herstellung der Glocke (2) die Schutzschicht karbonisiert und zu Graphitpulver umgewandelt wird, und dieses Graphitpulver entfernt wird, beispielsweise durch Schütteln oder gerichtete Ströme von komprimiertem Gas.

## Revendications

1. Disque pour un frein à disque comprenant une cloche support (2) définissant un axe de rotation x-x et ayant une pluralité de logements radiaux (8), définis par des parois (80) dans la cloche support (2), une bande de freinage (3) sensiblement coaxiale avec ledit axe de rotation x-x, et une pluralité d'éléments de connexion (4) comprenant des projections appropriées pour connecter la bande de freinage (3) à la cloche support (2), dans lequel :
- lesdits éléments de connexion (4) sont réalisés de manière intégrale et d'une seule pièce avec ladite bande de freinage (3) et comprennent des faces latérales (40) ;
- lesdits éléments de connexion (4) sont logés dans lesdits logements radiaux (8) de manière à être fixés dans la direction axiale et dans la direction tangentielle, et de manière à être libres dans la direction radiale ;
- lesdits éléments de connexion (4) se projettent vers l'intérieur depuis ladite bande de freinage (3) afin d'engager lesdits logements radiaux correspondants (8) ;
**caractérisé en ce que** :
- lesdits logements radiaux (8) entourent les projections (4) de manière à restreindre les mouvements de celles-ci dans la direction axiale et dans la direction tangentielle ;
- lesdites parois (80) sont réalisées de manière intégrale et d'une seule pièce avec la cloche support (2) ;
- les surfaces desdites faces latérales (40) des éléments de connexion (4) et lesdites parois (80) desdits logements radiaux (8) sont couplées de manière intime et disjointes, assurant un jeu entre les projections (4) et le logement (8).

2. Disque selon l'une quelconque des revendications précédentes, dans lequel lesdits éléments de connexion (4) ont une section quadrangulaire.

3. Disque selon la revendication 2, dans lequel lesdites faces latérales (40) sont parallèles les unes aux autres.

4. Disque selon la revendication 2, dans lequel lesdites faces latérales (40) sont en biais les unes par rapport aux autres d'un angle 2α.

5. Disque selon la revendication 4, dans lequel ledit angle 2 ²α est compris entre 0° et 6°.

6. Disque selon l'une quelconque des revendications 3 à 5, dans lequel lesdites faces latérales (40) comprennent un chanfrein (42).

7. Disque selon l'une quelconque des revendications 3 à 6, dans lequel lesdites faces latérales (40) ont une rugosité de surface moyenne Rₐ inférieure à 6,4 x 10⁻⁶ m.

8. Disque selon l'une quelconque des revendications précédentes, dans lequel des congés (44) sont agencés entre ladite bande de freinage (3) et lesdits éléments de connexion (4).

9. Disque selon l'une quelconque des revendications précédentes, dans lequel le disque est fabriqué en prévoyant une couche protectrice sur les projections (4) afin d'assurer un jeu minimum défini entre les projections (4) et le logement (8).

10. Disque selon la revendication précédente, dans lequel ladite couche protectrice est du graphite en poudre ou une résine chargée avec du graphite en poudre.

11. Disque selon la revendication précédente, dans lequel, lors de la fabrication de la cloche (2), la couche protectrice est carbonisée et transformée pour donner du graphite en poudre, et ce graphite en poudre est enlevé, par exemple en secouant ou au moyen de jets localisés de gaz comprimé.
